# FASCICULE DE BREVET EUROPEEN

(11) **EP 4 458 128 B1**
(45) Date de publication et mention de la délivrance du brevet: **18.11.2026**
(21) Numéro de dépôt: 24172364.2
(22) Date de dépôt: 25.04.2024
(51) Int. Cl.: A01D 34/43

(54) **PROCÉDÉ DE RÉGULATION DE LA VITESSE D'UN ROTOR D'UNE FAUCHEUSE DÉBROUSSAILLEUSE AU MOINS EN FONCTION DE LA CHARGE, ET FAUCHEUSE DÉBROUSSAILLEUSE**
VERFAHREN ZUR REGELUNG DER DREHZAHL EINES ROTORS EINES MÄHERS ABHÄNGIG VON EINER LAST, SOWIE MÄHER
METHOD FOR REGULATING THE SPEED OF A ROTOR OF A BRUSH CUTTER AT LEAST AS A FUNCTION OF THE LOAD, AND BRUSH CUTTER

(30) Priorité: 04.05.2023 FR 2304477
(43) Date de publication de la demande: 06.11.2024
(73) Titulaire: Noremat, 54710 Ludres (FR)
(72) Inventeur: GASPARD, Mathieu, 57590 FOSSIEUX (FR)
(74) Mandataire: Cabinet Bleger-Rhein-Poupon

(56) Documents cités:
- US-A- 5 794 422
- US-A1- 2014 069 072
- US-A1- 2019 141 897

## Description

La présente invention concerne un procédé de régulation de la vitesse de rotation d'un rotor d'un moteur hydraulique d'un groupe de fauche d'une faucheuse débroussailleuse alimenté, et plus particulièrement des équipements destinés à l'entretien du paysage, notamment les accotements routiers et les espaces verts.

La présente invention concerne également une faucheuse débroussailleuse, pour faucher et/ou débroussailler la végétation présente en bordure de routes ou de fossés, des haies, ou similaires.

L'invention est définie par les revendications annexées.

Typiquement, les dispositifs de faucheuses débroussailleuses comprennent essentiellement un bâti support destiné à être solidarisé préférentiellement avec un véhicule porteur, le plus souvent un tracteur agricole, manœuvré par un opérateur.

Sur le bâti support est monté, de manière articulée, un bras, à l'extrémité libre duquel est montée également articulée une tête de travail, ou groupe de fauche, muni(e) d'au moins un outil de coupe, généralement sous la forme d'un ou d'une pluralité de rotor(s) associé(s), par exemple à des fléaux de coupe.

Une faucheuse débroussailleuse à bras articulés, ou FDBA, comporte un circuit hydraulique indépendant, entrainé par la prise de force de son véhicule porteur, généralement un tracteur agricole.

La pompe hydraulique de la faucheuse débroussailleuse à bras articulés est ainsi entrainée par la prise de force de son porteur, et alimente le moteur hydraulique du groupe de fauche en huile.

Ce moteur entraine le rotor, et celui-ci restitue une partie de l'énergie à la matière végétale pour la faucher.

Il existe encore, dans l'état de la technique, des véhicules automoteurs comprenant à la fois une cabine pour l'opérateur, un bloc moteur pour le fonctionnement du véhicule, et un bras de fauchage compact implanté derrière ladite cabine.

Il est ainsi connu, par exemple, de la demande de brevet américain publiée sous le numéro US 2014/069072, une unité d'équipement motorisé extérieur, notamment une tondeuse, autopropulsée par un système d'entraînement de traction hydraulique actionné par un moteur principal, tel qu'un moteur à combustion interne.

Le moteur principal, alimente donc le système d'entrainement par traction, lui-même entraînant, à son tour, un ou plusieurs élément(s) s'engageant dans le sol, comme des roues ou des chenilles sans fin, pour que l'unité puisse avancer.

En outre, le moteur principal peut entraîner hydrauliquement au moins un outil de travail, comme une ou plusieurs unités de coupe de l'herbe, ou de plateaux de coupe, équipant la tondeuse.

Un tel entraînement s'effectue au travers d'une pompe hydraulique supplémentaire, connectée au moteur principal, pour fournir du fluide hydraulique sous pression à un ou plusieurs moteur(s) hydraulique(s) supplémentaire(s), pour le fonctionnement des outils de travail, notamment des lames de coupe. La pompe d'entrainement des lames est à débit fixe pour faire fonctionner les lames de coupe de l'herbe à une vitesse de rotation prédéterminée, qui est définie et choisie pour fournir de bonnes performances de coupe de l'herbe.

Dans ce dispositif de tondeuse, des indicateurs de la charge de coupe sont basés sur la vitesse de rotation des lames des plateaux de coupe, et, lorsque les conditions de charge détectées par un système contrôleur (au travers de capteurs etc) sont trop élevées, la vitesse au sol de la tondeuse est ralentie par ledit système contrôleur, en agissant sur la pompe d'entrainement de traction, par rapport à ce qui serait traditionnellement commandé par un utilisateur au travers de la commande de la pédale de traction.

En d'autres termes, il est cherché dans ce document à limiter la vitesse d'avance de la tondeuse lorsque la charge des outils de coupe détectée est trop importante.

Cela étant, dans les dispositifs de faucheuses débroussailleuses connus de l'état de la technique, et en particulier dans la demande de brevet américain US 2014/069072, l'ensemble des rotors des groupes de fauche présentent une vitesse de rotation prédéfinie, ou nominale, qui est constante et, par conséquent, non évolutive, durant la phase d'utilisation.

Or, le fonctionnement des rotors à une vitesse de rotation constante présente un certain nombre d'inconvénients.

En effet, d'une part, il existe des phases d'utilisation de la FDBA dans lesquelles la charge du rotor, correspondant notamment à la quantité de matière végétale à faucher, est considérée comme faible.

C'est le cas, notamment, lors d'une marche arrière effectuée par le véhicule porteur de la FDBA, dans le cas d'une fauche de seconde passe avec une quantité moindre de matière végétale à faucher, ou bien encore lorsque cette matière végétale est sèche.

Dans ces cas de figure, la puissance développée au régime nominal du rotor est inadaptée, car trop importante par rapport à la charge. En d'autres termes, l'énergie dépensée au régime défini est excessive, dans certaines conditions, et cette énergie en surplus est dissipée par les frottements des éléments mécaniques, les frottements hydrauliques et, principalement, les frottements aérodynamiques.

D'autre part, il est nécessaire d'ajuster la vitesse d'avance du véhicule porteur, et donc de la FDBA, en permanence, en fonction du chantier.

En effet, la vitesse d'avance du porteur est dépendante des conditions du chantier, notamment de la quantité de matière à faucher, du type de matière à faucher, de l'humidité présente, de la qualité de coupe désirée, ou bien encore de la présence d'obstacles et/ou de corps étrangers, ces conditions influençant la charge du rotor.

Ainsi, si le groupe de fauche se charge de manière excédentaire, il est nécessaire de diminuer la vitesse d'avance. A l'inverse, il est envisageable d'augmenter la vitesse d'avance du véhicule porteur dans la mesure où le groupe de fauche ne présente aucun signe de chargements excessifs, qui se traduiraient par une pression hydraulique élevée.

Par ailleurs, la qualité de coupe est impactée par la vitesse d'avance du véhicule porteur ou du véhicule automoteur.

En effet, le rotor fonctionnant à un régime constant, la distance au sol entre deux passages d'un même fléau est directement liée à la vitesse d'avance du porteur. Par conséquent, la qualité de coupe est dépendante de la vitesse d'avancement.

A titre d'exemple, à régime constant du rotor, pour un rotor dont le régime nominal est de 2950 tours/minute, et pour une vitesse d'avance du porteur égale à 4 km/h, l'intervalle de passage d'un même fléau au niveau de la végétation à faucher est de 23 mm tandis que cet intervalle est de 40 mm pour une vitesse de 7 km/h.

Il en résulte une quantité de matière végétale non fauchée par le dispositif qui est plus importante lorsque celui-ci avance à une vitesse de 7 km/h, entrainant inévitablement une dégradation de la qualité de coupe.

La présente invention se veut à même de remédier, au moins en partie, aux inconvénients des dispositifs de faucheuses débroussailleuses de l'état de la technique, en proposant un système ayant pour objectif principal de diminuer la consommation d'énergie du porteur en ne fournissant, à la matière végétale à faucher, que la quantité d'énergie nécessaire et suffisante pour la faucher convenablement.

Dans une démarche inventive, il a ainsi été imaginé la mise au point d'un procédé et d'un dispositif aptes à permettre une gestion de la variation de la vitesse de rotation du rotor dont est équipé une FDBA, d'une part, en fonction de la charge (soit principalement la quantité de matière végétale à faucher) et, d'autre part, accessoirement, en fonction de la vitesse d'avance du véhicule porteur sur lequel est montée la FDBA.

A noter que la charge varie, en plus de la quantité de matière, selon l'humidité, le type de végétation ou encore le type de fléaux que comporte le groupe de fauche.

La présente invention a pour but principal de permettre une diminution de la consommation de l'énergie du groupe de fauche. En effet, dans les phases d'utilisation de la FDBA où il y a peu de matière végétale à faucher, et/ou lorsque ladite matière végétale est sèche, il est envisageable de diminuer la vitesse de rotation du rotor en sorte de diminuer la puissance développée et, par conséquent, d'économiser de l'énergie. Une telle diminution de la vitesse de rotation du rotor est également applicable lorsque la vitesse d'avance du véhicule porteur est faible.

Un deuxième objectif de la présente invention est d'augmenter le débit de chantier des utilisateurs. A l'inverse de l'exemple précédent, où l'on adapte la vitesse de rotation du rotor en la diminuant, lorsque la densité de matière végétale à faucher est importante et/ou que l'opérateur souhaite augmenter la vitesse d'avance du véhicule porteur, il peut s'avérer intéressant d'accroître la vitesse de rotation du rotor afin d'éviter les bourrages du groupe de fauche, et éviter à l'opérateur d'avoir à diminuer sa vitesse d'avance.

Grâce à la présente invention, à faible vitesse d'avance du véhicule porteur, le régime rotor est diminué par rapport au régime nominal car la charge est plus faible, ce qui permet de diminuer l'énergie consommée. Au contraire, à partir d'une vitesse d'avance plus importante, le régime rotor est augmenté pour garder une qualité de coupe optimale. Ainsi, par la mise en œuvre de la présente invention, la qualité de coupe n'est plus impactée par l'augmentation de la vitesse du porteur, la quantité de matière fauchée restant constante même en cas d'accélération du porteur.

A cet effet, l'invention concerne un procédé de régulation de la vitesse de rotation d'un rotor d'un moteur hydraulique d'un groupe de fauche d'une faucheuse débroussailleuse alimenté, via un circuit hydraulique, par une pompe hydraulique pilotée électriquement et entrainée par une prise de force transmettant le couple des moyens moteurs d'un véhicule, ladite régulation étant effectuée par le pilotage du débit de ladite pompe hydraulique à partir d'un débit initial D de fonctionnement compris entre un débit minimal de fonctionnement Dmin et un débit maximal de fonctionnement Dmax, ledit procédé étant caractérisé en ce qu'il est apte à permettre une variation de la vitesse de rotation dudit rotor au moins en fonction de la charge de matière végétale à faucher, et en ce qu'il comporte, au moins, les étapes suivantes, prises dans l'ordre :
- Définition d'une pression de référence PO de ladite pompe hydraulique, ainsi qu'au moins une valeur de variation de la pression ▲P par rapport à la pression de référence PO, et une valeur de variation du débit ▲D de fonctionnement de la pompe hydraulique ;
- Réalisation de mesures, à intervalles de temps réguliers, de la pression effective P au moyen d'au moins un capteur de pression équipant ladite pompe hydraulique et/ou le circuit hydraulique et/ou le moteur hydraulique ;
- Si la pression effective mesurée P est inférieure à P0 - ▲P, diminution du débit D de fonctionnement de ladite pompe hydraulique de la valeur ▲D, en sorte de réduire la vitesse de rotation du rotor ;
- Vérification du débit D de fonctionnement de la pompe hydraulique par rapport à son débit minimal de fonctionnement Dmin et, si le débit D est déjà égal à Dmin, maintien de la valeur de débit au minimum ;
- Si la pression effective mesurée P est supérieure à P0 + ▲P, augmentation du débit D de fonctionnement de ladite pompe hydraulique de la valeur ▲D, en sorte d'accroître la vitesse de rotation du rotor ;
- Vérification du débit D de fonctionnement de la pompe hydraulique par rapport à son débit maximal de fonctionnement Dmax et, si le débit D est déjà égal à Dmax, maintien de la valeur de débit au maximum ;
- Si la pression effective mesurée P est comprise entre P0 - ▲P et P0 + ▲P, maintien du débit D de fonctionnement de ladite pompe hydraulique ;
- Envoi de signaux de commande électriques à ladite pompe hydraulique avec la consigne de diminution, d'augmentation, ou de maintien du débit D de fonctionnement selon les étapes précédentes ;
- Répétition des étapes ci-dessus, de mesure de la pression effective P et de régulation du débit D, en boucle autant de fois que nécessaires à la durée de l'opération de fauchage de la matière végétale.

L'invention concerne, également un procédé de régulation de la vitesse de rotation d'un rotor d'une faucheuse débroussailleuse en fonction de la charge de matière végétale à faucher et en fonction de la vitesse d'avancement du véhicule équipé d'un moyen de mesure de ladite vitesse d'avancement, caractérisé en ce qu'il comporte, en plus, les étapes suivantes :
- Définition d'au moins cinq valeurs de débit de fonctionnement de la pompe hydraulique à savoir un débit minimum Dmin, au moins trois débits intermédiaire Dint1, Dint2 et Dint3 avec Dint1 <Dint2<Dint3 et Dmin<Dint1, et un débit maximum Dmax, avec Dmax>Dint3, à appliquer à ladite pompe selon la vitesse d'avancement du véhicule ;
- Réalisation de mesures, à intervalles de temps réguliers, de la vitesse V d'avancement du véhicule ;
- Définition d'une corrélation entre la vitesse d'avancement V du véhicule et le débit à appliquer à ladite pompe hydraulique, comme suit :
   ∘ Si V est inférieure à une vitesse minimale Vmin, application du débit minimum Dmin ;
   ∘ Si V est comprise entre une première vitesse intermédiaire V1int1, avec V1int1 supérieure ou égale à Vmin et une deuxième vitesse intermédiaire V2int1, avec V2int1>V1int1, application du premier débit intermédiaire Dint1 ;
   ∘ Si V est comprise entre une troisième vitesse intermédiaire V1int2, avec V1int2 supérieure à V2int1, et une quatrième vitesse intermédiaire V2int2, V2int2>V1int2, application du deuxième débit intermédiaire Dint2 ;
   ∘ Si V est comprise entre une cinquième vitesse intermédiaire V1int3, avec V1int3 supérieure à V2int2, et une sixième vitesse intermédiaire V2int3, avec V2int3>V1int3, application du troisième débit intermédiaire Dint3 ;
   ∘ Si V est supérieure à une vitesse minimale Vmax, avec Vmax > V2int3, application du débit maximum Dmax ;
- Comparaison entre les valeurs de régulation du débit D du fonctionnement de la pompe hydraulique déterminé par rapport à la charge et de régulation du débit par rapport à la vitesse d'avancement V du véhicule et pilotage de ladite pompe avec le plus grand des deux débits.

La présente invention concerne également un dispositif de régulation de la vitesse de rotation d'un rotor d'une faucheuse débroussailleuse au moins en fonction de la charge de matière végétale à faucher pour la mise en œuvre du procédé selon l'invention, ledit rotor équipant un groupe de fauche de ladite faucheuse débroussailleuse, et comportant une pluralité de moyens de coupe.

Ledit dispositif de régulation selon l'invention comporte au moins un moyen de mesure de la pression positionné au niveau de la pompe hydraulique et/ou du circuit hydraulique et/ou du moteur hydraulique d'entraînement en rotation du rotor du groupe de fauche de la faucheuse débroussailleuse, ledit dispositif de régulation comportant en outre, au moins, des moyens de pilotage électronique de la pompe hydraulique d'entraînement du moteur hydraulique d'entraînement en rotation du rotor du groupe de fauche, lesdits moyens de pilotage électronique incluant des moyens de calcul et de commande en fonction de la charge, ainsi que des moyens de communication et de transmission de l'information entre ledit au moins un moyen de mesure de la pression et lesdits moyens de pilotage, et entre ces derniers et ladite pompe hydraulique pour la régulation du débit de cette dernière en sorte de contrôler de la vitesse de rotation du rotor et donc des moyens de coupes (fléaux, lames, etc.) qu'il porte.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

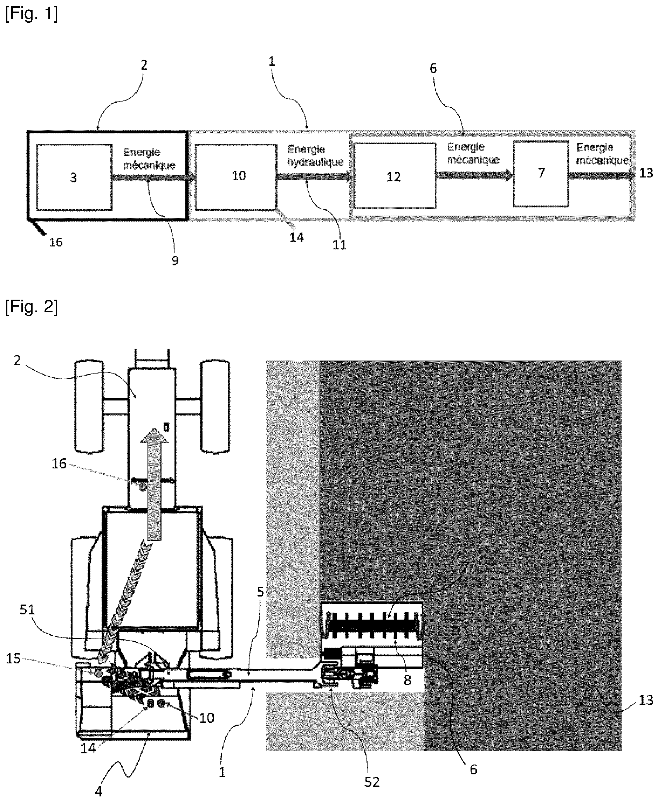

[Fig.1] représente une vue schématisée illustrant le principe général de fonctionnement d'une faucheuse débroussailleuse à bras articulés, ou FDBA, montée par l'intermédiaire d'un bâti support sur un véhicule porteur motorisé, type tracteur agricole, la FDBA étant équipée d'un circuit hydraulique indépendant entrainé par une prise de force de son véhicule porteur, avec une pompe hydraulique entraînée par ladite prise de force et alimentant un moteur hydraulique que comporte un groupe de fauche de la FDBA, ledit moteur entrainant un rotor qui restitue une partie de l'énergie de la matière végétale à faucher au travers de moyens de coupe ;
[Fig.2] représente une vue schématisée et de dessus d'une FDBA, sur son véhicule porteur en mouvement et en situation de fauchage d'une matière végétale, illustrant un exemple de régulation de la vitesse de rotation du rotor que comporte le groupe de fauche de la FDBA, cette régulation étant effectuée par le pilotage du débit hydraulique de la pompe de la FDBA, réalisé sous l'action de moyens de pilotage électronique de la pompe, incluant des moyens de calcul et de commande en fonction, d'une part, de la charge de matière végétale à faucher déterminée par l'intermédiaire d'un capteur de pression positionné dans l'un des éléments composant le circuit hydraulique de la FDBA, la régulation étant effectuée, d'autre part, en fonction de la vitesse d'avance du véhicule portant la FDBA, déterminée grâce à des moyens de mesure de la vitesse dudit véhicule, les flux d'informations entre les différents moyens de mesure (capteur pression et mesure vitesse), les moyens de calcul et de commande, et la pompe pour la régulation du débit, étant représentés.

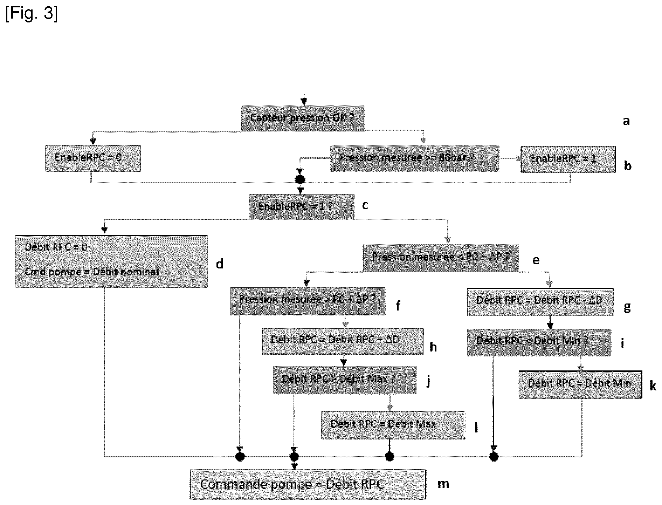

[Fig.3] correspond à un organigramme illustrant schématiquement un programme d'une première variante d'un premier mode de réalisation du procédé de régulation de la vitesse de rotation d'un rotor d'un groupe de fauche d'une FDBA, apte à permettre une variation de la vitesse de rotation dudit rotor en fonction de la charge de matière végétale à faucher, cette régulation étant une régulation dite « par paliers » ;

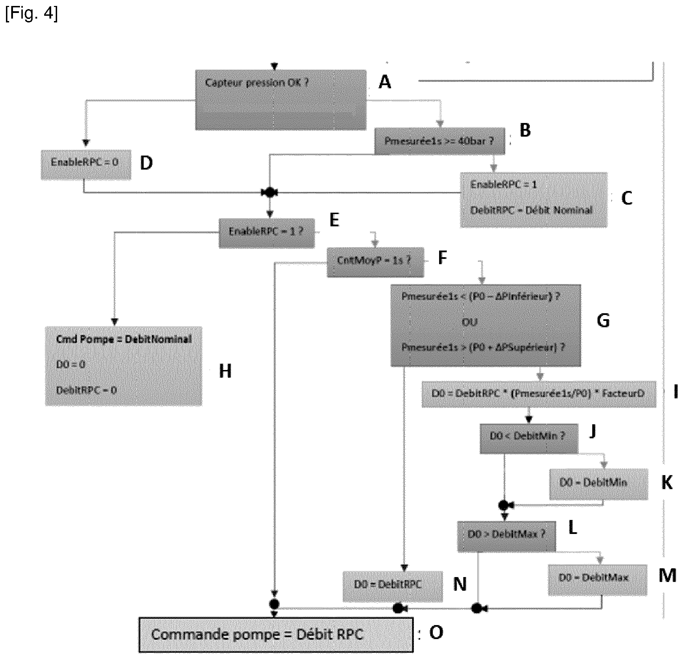

[Fig.4] correspond à un organigramme illustrant schématiquement un programme d'une deuxième variante d'un premier mode de réalisation du procédé de régulation de la vitesse de rotation d'un rotor d'un groupe de fauche d'une FDBA, apte à permettre une variation de la vitesse de rotation dudit rotor en fonction de la charge de matière végétale à faucher, cette régulation étant une régulation dite « linéaire » ;

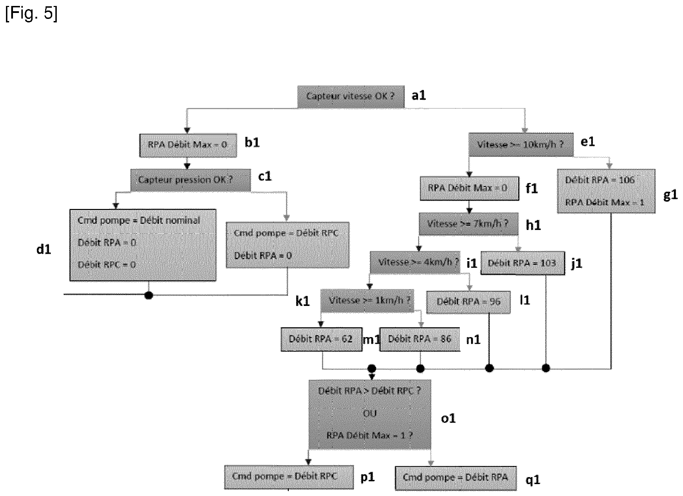

[Fig.5] correspond à un organigramme illustrant schématiquement un programme d'un deuxième mode de réalisation du procédé de régulation de la vitesse de rotation d'un rotor d'un groupe de fauche d'une FDBA, apte à permettre une variation de la vitesse de rotation dudit rotor en fonction de la vitesse d'avance du véhicule portant la FDBA, ledit programme étant effectué en parallèle de la régulation par la charge.

Ainsi, en référence aux figures des dessins ci-joints, la présente invention concerne un procédé applicable, dans le domaine agricole, à un dispositif de faucheuse débroussailleuse 1 à bras articulés qui peut être destiné à être monté sur un véhicule porteur 2 équipé d'un moteur 3, notamment un moteur thermique, type tracteur agricole ou similaire.

De manière classique et connue, un tel dispositif de faucheuse débroussailleuse 1 comporte un bâti support 4 fixé sur le véhicule porteur motorisé 2.

Sur ce bâti support 4 de la faucheuse débroussailleuse 1 est monté, de manière articulée, une première extrémité 51 d'un bras 5 support d'un groupe de fauche 6, ce dernier étant monté articulé à l'extrémité libre 52 dudit bras 5, opposée à ladite première extrémité 51.

Le groupe de fauche 6 est équipé d'un rotor 7 comportant une pluralité de moyens de coupe 8, par exemple sous la forme de fléaux 8.

Le moteur thermique 3 du véhicule porteur 2 entraine, au travers d'une prise de force 9, une pompe hydraulique 10 équipant la faucheuse débroussailleuse 1, ladite pompe 10 pouvant être à débit variable, et étant par ailleurs apte à être pilotée électriquement par des moyens de commande, ou moyens de pilotage, adaptés.

A noter que, sur un système hydraulique, la présente solution peut fonctionner également avec une pompe hydraulique à cylindrée fixe et moteur à cylindrée variable ou pompe et moteur tous deux à cylindrée variable.

Cette pompe hydraulique 10 alimente en fluide comprimé, via un circuit hydraulique 11, un moteur hydraulique 12 que comporte le groupe de fauche 6 de la faucheuse débroussailleuse 1, l'ensemble des éléments hydrauliques formant un système hydraulique.

Le moteur hydraulique 12 est apte à permettre un entrainement en rotation du rotor 7 du groupe de fauche 6, entrainant une mise en mouvement des moyens de coupe 8 et ainsi permettre le fauchage de la matière végétale 13 que l'on souhaite éliminer d'un accotement routier, d'une bordure de fossé, d'une haie ou autre.

Dans un exemple de réalisation non illustré sur les dessins ci joints, la présente invention est également applicable à un groupe de fauche porté par un bras articulé directement monté sur un véhicule automoteur.

Dans un tel dispositif de faucheuse débroussailleuse 1 tel que classiquement connu pour le fauchage d'une matière végétale 13, l'invention concerne, plus particulièrement, un procédé permettant de réguler, c'est-à-dire de faire varier, la vitesse de rotation du rotor 7 du groupe de fauche de ladite faucheuse débroussailleuse 1, la régulation étant effectuée, au moins, selon une première caractéristique du procédé objet de l'invention, selon la charge de matière végétale 13 à faucher, qui dépend principalement de la quantité de matière, mais également de l'humidité, du type de végétation ou encore du type de fléaux que comporte le groupe de fauche.

Plus précisément, la régulation de la vitesse de rotation du rotor 7 est effectuée au moyen du pilotage du débit de la pompe hydraulique 10 équipant le dispositif de faucheuse débroussailleuse 1, partant d'un débit initial de fonctionnement D qui est compris entre un débit minimal Dmin et un débit maximal Dmax de fonctionnement de ladite pompe hydraulique 10.

A noter que les débits Dmin et Dmax peuvent être variables en fonction du modèle de pompe hydraulique 10 qui équipe la faucheuse débroussailleuse 1.

En effet, la puissance Pu (en W) développée à chaque instant par le système hydraulique correspond au produit de la pression hydraulique P (en Pa) par le débit hydraulique D (en m³/s), ou encore au produit du couple C (en N.m) résistant au rotor 7 par la vitesse de rotation ω (en rad/s).

Le procédé de régulation selon l'invention propose, par conséquent, d'agir en faisant varier le débit D de fonctionnement de la pompe hydraulique 10 ce qui va entraîner une modification de la vitesse de rotation du rotor 7 du groupe de fauche 6.

La puissance instantanée développée par le système est donc également impactée, ce qui aboutit à une diminution de l'énergie consommée par le système sur une certaine période de régulation, lorsque la vitesse de rotation du rotor 7 est réduite.

A cet effet, le procédé de régulation de la vitesse de rotation du rotor 7 du groupe de fauche 6 d'une faucheuse débroussailleuse à bras articulés 1 est mis en œuvre comme décrit ci-après.

Dans un premier temps, il convient de définir au moins les données d'entrée suivantes, à savoir, une pression de référence prédéterminée P0 de ladite pompe hydraulique 10, ainsi qu'au moins une valeur de variation de la pression ▲P par rapport à la pression de référence PO, et une valeur de variation ▲D à appliquer au débit de fonctionnement D de la pompe hydraulique 10.

La pression P0 correspond à une valeur de pression constante de référence qui peut être définie, selon les caractéristiques de la pompe hydraulique 10, par le fabricant de la FDBA 1, ou bien encore par l'opérateur manœuvrant ladite FDBA 1, comme étant une pression adéquate permettant de faucher convenablement la matière végétale 13, sans détérioration de la qualité de coupe, tout en utilisant une quantité d'énergie optimale.

La valeur de variation de débit ▲D à appliquer à la pompe hydraulique 10 est une valeur qui peut être définie et constante tout au long du procédé de régulation, ou une valeur qui est calculée à intervalles de temps régulier, comme cela sera expliqué, plus en détail, dans la suite de la description.

Ensuite, à partir de la mise en fonctionnement de la faucheuse débroussailleuse 1, des mesures de la pression effective P sont effectuées, à intervalles de temps réguliers, au moyen d'au moins un moyen de mesure de pression, de préférence sous la forme d'un capteur de pression 14 disposé au niveau de ladite pompe hydraulique 10 et/ou du circuit hydraulique 11 et/ou du moteur hydraulique 12.

Si la pression effective mesurée P est inférieure à P0 - ▲P, une diminution du débit D de fonctionnement de ladite pompe hydraulique 10 de la valeur **▲**D est appliquée, ce qui aboutit finalement à une réduction de la vitesse de rotation du rotor 7.

En effet, la pression P du circuit hydraulique 11 (que ce soit au niveau de la pompe, du moteur, ou du circuit lui-même) est directement proportionnelle à la charge à faucher. Ainsi, si la pression effective P diminue, et devient inférieure à P0 - ▲P, cela signifie qu'il est envisageable de réduire le débit D de fonctionnement de la pompe 11 pour ralentir le rotor 7 du groupe de fauche 6 et ainsi économiser de l'énergie.

Cela étant, une comparaison entre le débit D de fonctionnement de la pompe hydraulique 10 et son débit minimal de fonctionnement Dmin est effectuée et, si le débit D est déjà égal à Dmin, la valeur de débit de ladite pompe 10 est maintenue à son débit minimum Dmin.

Au contraire, si le moyen de mesure de la pression détecte que la pression effective mesurée P dans les éléments du circuit hydraulique est supérieure à P0 + ▲P, autrement dit que la charge est plus importante, une augmentation du débit D de fonctionnement de ladite pompe hydraulique 10 de la valeur ▲D est appliquée, en sorte d'accroître la vitesse de rotation du rotor 7.

Là encore, une comparaison entre le débit D de fonctionnement de la pompe hydraulique 10 et, dans ce cas-là, son débit de fonctionnement maximal Dmax est réalisée et, si le débit D est déjà égal à Dmax, la valeur du débit de fonctionnement est maintenue au débit maximal Dmax.

On comprend alors que, si la pression effective P mesurée dans le système hydraulique de la faucheuse débroussailleuse 1 est comprise entre P0 - ▲P et P0 + ▲P, le débit D de fonctionnement de ladite pompe hydraulique 10 n'est pas modifié.

En prenant en considération les données d'entrée, à savoir les valeurs qui ont été mesurées (pression effective P) ainsi que les valeurs qui ont été préalablement définies (pression de référence PO, valeur mesurée de variation de la pression ▲P par rapport à la pression de référence P0 et valeur de variation du débit ▲D à appliquer dans le circuit hydraulique), la pompe hydraulique 10 est commandée électriquement par envoi, selon le cas, d'une consigne de diminution du débit selon ▲D, d'augmentation du débit selon ▲D, ou de maintien du débit D de fonctionnement, consigne qui a été déterminée dans les étapes précédentes du procédé de l'invention.

A cet effet, la faucheuse débroussailleuse 1 est équipée de moyens de pilotage électroniques 15, comportant des moyens de calcul et de commande, qui sont représentés sur la figure 2.

De tels moyens de pilotage électroniques 15 sont aptes à recevoir, en tant que donnée d'entrée, au moins la pression effective P de fonctionnement, qui est liée aux variables de la zone à faucher 13 (densité, humidité, nature de la végétation), et à calculer, en tenant compte de P et des valeurs prédéfinies PO, **▲**P et **▲**D, la valeur de pilotage de débit à appliquer à la pompe hydraulique 10 pour obtenir le régime rotor 7 désiré (accélération, décélération ou maintien de la vitesse de rotation dudit rotor 7).

Les flux d'informations et de communication entre les moyens 15 de calculs et de commande électrique et, au moins, d'une part, le capteur de pression 14 dans l'un des éléments hydrauliques de la faucheuse débroussailleuse et, d'autre part, la pompe hydraulique 10 pour le pilotage du débit hydraulique de fonctionnement D de celle-ci, sont représentés par un fléchage ajouré sur la figure 2.

Les paramètres des moyens de calcul et de commande, dont sont équipés les moyens de pilotage 15, sont définis afin que le régime rotor 7, à savoir sa vitesse de rotation, soit ajusté(e) en permanence en fonction des paramètres d'entrée rappelés précédemment (P, PO, ▲P, **▲**D, et également en fonction des débits maximum Dmax et minimum Dmin de la pompe 10) pour permettre une optimisation de l'énergie dépensée par le groupe de fauche 6 et une régularité de coupe de la matière végétale 13.

Les étapes détaillées ci-dessus, de mesure de la pression effective P et de régulation du débit D, sont répétées en boucle, autant de fois que nécessaire à la durée de l'opération de fauchage de la matière végétale 13.

Ainsi, au moyen du procédé de l'invention, une régulation du débit D auquel fonctionne la pompe hydraulique 10 de la FDBA 1 est effectuée, en sorte que la valeur de pression P effective dans les éléments du circuit hydraulique 11, mesurée à intervalles de temps réguliers par le capteur de pression 14, soit, en permanence, la plus proche de la pression de référence P0 pour permettre un fauchage optimal de la végétation 13 tout en limitant la consommation d'énergie à la seule quantité nécessaire pour un tel fauchage.

Dans une première variante de réalisation du procédé de régulation de la vitesse de rotation d'un rotor 7 d'une faucheuse débroussailleuse 1 en fonction de la charge, la régulation consiste en une régulation dite « par paliers ».

Un exemple avantageux de cette régulation par paliers de la vitesse de rotation du rotor 7 est illustré, sous la forme d'un organigramme, sur la figure 3 des dessins ci-joints, et sera décrit plus en détails ci-après.

Avantageusement, dans une telle régulation de la vitesse de rotation du rotor 7 par paliers, on définit, en plus des valeurs mentionnées précédemment P0, ▲P et de **▲**D, qui est, dans ce cas, prédéterminée, une deuxième valeur de variation de la pression ▲P2.

Par conséquent, dans cette régulation par paliers, la première valeur de variation de la pression ▲P, par rapport à la pression de référence PO, est notée ▲P1.

La deuxième valeur de variation de la pression AP2, par rapport à la pression de référence PO, peut être avantageusement différente de la valeur ▲P1, avec ▲P2 > ▲P1.

Ensuite, le procédé de régulation se déroule comme suit :
- Réalisation de mesures, toujours à intervalles de temps réguliers, de la pression effective P du fluide comprimé dans les éléments du circuit hydraulique au moyen dudit au moins un capteur de pression 14 et comparaison de cette pression effective P mesurée au résultat de la différence P0 - ▲P1 ;
- Si la pression effective P mesurée est supérieure ou égale à P0 - ▲P1, vérification que cette valeur P est supérieure à la somme P0 + ▲P2 ;
- Si la pression effective mesurée P est inférieure à P0 - ▲P1, indiquant par conséquent une charge moindre, commande électrique de ladite pompe hydraulique 10 en sorte de diminuer le débit D de fonctionnement de la valeur **▲**D, et, par conséquent, de réduire la vitesse de rotation du rotor 7 ;
- Si la pression effective mesurée est supérieure à P0 + ▲P2, indiquant au contraire une charge importante, alors, dans ce cas, commande électrique de ladite pompe hydraulique 10 en sorte d'augmenter le débit D de fonctionnement de la valeur **▲**D, et ainsi d'accroître la vitesse de rotation du rotor 7 ;
- En revanche, si la pression effective mesurée P est comprise entre P0 - ▲P1 et P0 + ▲P2, pas de modification de la pression et maintien du débit D de fonctionnement de ladite pompe hydraulique 10.

Le fait de définir une deuxième valeur de variation de la pression ▲P2, en plus de ▲P1, permet de favoriser une diminution du débit D de fonctionnement de la pompe hydraulique 10 et, à l'inverse, de limiter son augmentation dans le but d'avoir une puissance instantanée minimale dans le système hydraulique le plus longtemps possible.

En d'autres termes, en définissant deux valeurs ▲P1 et ▲P2, avec ▲P1<▲P2, et en augmentant le débit D uniquement lorsque la pression effective P est supérieure à la somme de la pression de référence P0 et de ▲P2, le gain énergétique permis par l'invention est encore amélioré.

En effet, dans cette variante de réalisation, une augmentation du débit D de fonctionnement de la pompe 10, et par conséquent une accélération de la vitesse de rotation du rotor 7, sont effectuées uniquement lorsque la pression P mesurée traduit une charge importante de matière végétale à faucher 13.

A titre d'exemple non limitatif, la première valeur de variation de pression ▲P1 telle que définie dans le procédé de l'invention, par l'opérateur notamment, peut être comprise entre 0,5 et 1,5 bar. Plus préférentiellement encore, cette valeur ▲P1 est de l'ordre de, ou égale à, 1 bar.

En ce qui concerne la deuxième valeur de variation de pression ▲P2 définie, celle-ci est avantageusement comprise entre 8 et 12 bar, et est encore plus avantageusement de l'ordre de, ou égale à, 10 bar.

Cela étant, il est également envisageable que les valeurs ▲P1 et ▲P2 soient équivalentes.

A noter que, dans tous les cas, avant de commander électriquement la pompe hydraulique 10 en lui envoyant une consigne, via les moyens de pilotage 15, de diminution ou d'augmentation du débit D de fonctionnement, une vérification du fait que ce débit D n'est pas, respectivement, à son débit minimal Dmin de fonctionnement, ou à son débit maximal Dmax de fonctionnement est effectuée.

Si le débit de fonctionnement D est déjà au minimum ou au maximum, la valeur du débit est maintenue à son minimum ou à son maximum, selon le cas.

Tout préférentiellement, la mesure de la pression effective P est effectuée dans un intervalle de temps présentant une durée inférieure à 5 secondes, cette durée étant de préférence inférieure ou égale à 1 seconde et supérieure ou égale à 20 ms.

En d'autres termes, la pression effective P dans les éléments (pompe 10, moteur 12, flexibles, etc) de l'ensemble du circuit hydraulique 11, est mesurée extrêmement régulièrement, de préférence à chaque seconde, en sorte de permettre un pilotage particulièrement précis et réactif du débit D de fonctionnement de la pompe hydraulique 10 en cas de variation de la pression P détectée par le capteur de pression 14, traduisant une modification de la charge, et nécessitant une adaptation de la vitesse de rotation du rotor 7, accélération ou, au contraire, ralentissement.

Selon une caractéristique particulière du procédé de régulation de la vitesse de rotation d'un rotor 7 de l'invention, préalablement à la réalisation des étapes de mesures régulières de pression effective P et de régulation du débit D de la pompe hydraulique 10, telles qu'elles ont été décrites ci-dessus, notamment dans le cadre d'une régulation dite « par paliers », les opérations suivantes sont réalisées :
- Vérification de la transmission d'une information par le capteur de pression 14 et vérification que la valeur de pression mesurée et transmise par ledit capteur 14 est supérieure ou égale à une pression minimum Pmin ;
   Une telle vérification préalable, pouvant être effectuée par les moyens de pilotage électroniques 15, permet de s'assurer du bon fonctionnement du capteur de mesure de la pression 14.
- Si ledit capteur de pression 14 transmet une information et que la valeur de pression mesurée est supérieure à Pmin, la régulation par paliers de la vitesse du rotor 7, en fonction de la charge, est activée, telle qu'elle a été décrite de manière détaillée précédemment ;
- Il est également envisageable, tout préférentiellement, de vérifier ensuite que le programme de régulation de la vitesse du rotor 7 en fonction de la charge est correctement activé ;
- Selon le résultat des étapes de vérification précédentes, s'il est détecté que le capteur de pression 14 ne transmet pas d'information, ou si l'information transmise correspond à une pression inférieure à Pmin, ou si la régulation de la vitesse du rotor 7 en fonction de la charge n'est pas activée, un débit nominal Dnom de fonctionnement de la pompe hydraulique 10 est appliqué, Dnom correspondant à un débit de fonctionnement de ladite pompe 10 par défaut et constant, selon les caractéristiques techniques cette dernière.

En d'autres termes, tout préférentiellement, le procédé de régulation par paliers, en référence à la figure 3, peut être appliqué comme suit :
a) Vérification que le capteur de pression 14 transmet une information ;
b) Vérification que la pression P mesurée est supérieure à une pression minimum P min pour s'assurer du fonctionnement du capteur 14 ; si c'est le cas la régulation proportionnelle à la charge RPC est activée, et, si ce n'est pas le cas, la régulation RPC n'est pas activée ;
c) Vérification que la régulation proportionnelle à la charge RPC est activée ;
d) Si la régulation n'est pas activée (Débit RPC = 0), pas de pilotage de la pompe 10 par régulation, et application du débit par défaut (débit nominal Dnom) ;
e) Si la régulation RPC est activée, comparaison de la pression mesurée à P0 - ▲P1 (noté P0 -▲P sur l'organigramme) ;
f) Si la pression n'est pas inférieure à P0 - ▲P1, vérification que la pression mesurée est supérieure à P0 + ▲P2 (noté P0 + ▲P sur l'organigramme) ;
g) Si la pression est inférieure à P0 - ▲P1, diminution du débit de fonctionnement de la pompe 10 par soustraction de la valeur ▲D au débit actuel ;
h) Si la pression est supérieure à P0 + ▲P2, augmentation du débit de fonctionnement de la pompe 10 en ajoutant la valeur ▲D au débit actuel ;
i)/j) Vérification que le débit n'est pas à son minimum (i) ou à son maximum (j);
k)/l) : Si le débit est déjà au minimum ou au maximum, on laisse la valeur de débit au minimum (k) ou au maximum (I) selon le cas ;
m) Envoi, par les moyens de pilotage électroniques 15 de la consigne de débit calculé aux étapes e)/f)/g)/h)/i)/j)/k)/I) à la pompe hydraulique 10.

Dans une deuxième variante de réalisation du procédé de régulation de la vitesse de rotation d'un rotor 7 d'une faucheuse débroussailleuse 1 en fonction de la charge, la régulation consiste en une régulation dite « linéaire ».

Un exemple avantageux de cette régulation linéaire de la vitesse de rotation du rotor 7 est illustré, sous la forme d'un organigramme, sur la figure 4 des dessins ci-joints, et sera décrit plus en détails ci-après.

Dans cette régulation linéaire, la première valeur de variation de la pression ▲P, par rapport à la pression de référence PO, est notée ▲P' et est légèrement décalée de la pression de référence P0.

Ainsi, de préférence, ▲P' est supérieure à 0 et inférieure ou égale à 1 bar. Plus préférentiellement encore, ▲P' est supérieure à 0 et inférieure ou égale à 0,5 bar.

Par ce moyen, il est vérifié que la pression effective est suffisamment éloignée de la pression cible pour réguler. Si, par exemple, elle est à +/- 1bar de la pression ciblée, il est considéré qu'il n'est pas nécessaire de changer le pilotage de la pompe. En revanche, si la pression effective est supérieure de 5 bar, par exemple, par rapport à la pression de référence, alors il faut réguler.

En outre, dans une régulation linéaire de la vitesse de rotation du rotor 7, la valeur de variation du débit ▲D est, cette fois ci, non plus prédéterminée comme dans la régulation par paliers, mais définie par calcul selon la valeur absolue de la formule |D0 - D|, avec :
- D correspondant au débit de fonctionnement de la pompe hydraulique ;
- DO étant le débit à atteindre calculé selon la formule : DO=(P/PO)*D,
   - avec P étant la pression mesurée au moyen dudit au moins un capteur 14 et
   - P0 la pression de référence P0 de ladite pompe hydraulique 10.

En d'autres termes, le débit D0, calculé selon la formule (P/P0)*D, correspond au débit à appliquer à la pompe 10 et le calcul de ▲D donne la valeur pour passer du débit courant de fonctionnement D au débit à atteindre D0.

On comprend dès lors que, si la pression mesurée est supérieure à la pression de référence P0 à atteindre (augmentation de la charge) le rapport P/PO sera supérieur à 1 et le débit DO à appliquer à la pompe 10 sera supérieur au débit actuel D de fonctionnement de cette dernière.

Par conséquent, le débit de fonctionnement de la pompe 10 est augmenté de cette différence ▲D.

A l'inverse, si la pression mesurée est inférieure à la pression de référence P0 à atteindre (diminution de la charge) le rapport P/PO sera inférieur à 1 et le débit DO à appliquer à la pompe 10 sera inférieur au débit actuel D de fonctionnement de cette dernière.

Par conséquent, le débit de fonctionnement de la pompe 10 est diminué de cette différence ▲D.

Ensuite, le procédé de régulation linéaire se déroule comme suit :
- Réalisation de mesures, à intervalles de temps réguliers, de la pression effective P du fluide comprimé dans les éléments du circuit hydraulique au moyen dudit au moins un capteur de pression 14 et calcul d'une pression moyenne Pmoy sur cet intervalle de temps ;
- Si la pression effective moyenne mesurée Pmoy est inférieure à P0 - ▲P', diminution du débit D de fonctionnement de ladite pompe hydraulique 10 de la valeur **▲**D, en sorte d'atteindre le débit DO calculé et, par conséquent de réduire la vitesse de rotation du rotor 7 ;
- Si la pression effective moyenne mesurée Pmoy est supérieure à P0 + ▲P', augmentation du débit D de fonctionnement de ladite pompe hydraulique 10 de la valeur **▲**D, en sorte d'atteindre le débit DO calculé et d'accroître la vitesse de rotation du rotor 7 ;
- En revanche, si la pression effective mesurée P est comprise entre P0 - ▲P' et P0 + ▲P', maintien du débit D de fonctionnement de ladite pompe hydraulique 10 à son débit actuel ;
- Envoi de signaux de commande électriques à ladite pompe hydraulique 10 avec la consigne de diminution, d'augmentation, ou de maintien du débit D de fonctionnement selon les étapes précédentes.

A noter que, dans tous les cas, et de manière similaire à la variante de réalisation du procédé par paliers, avant de commander électriquement la pompe hydraulique 10 en lui envoyant une consigne, via les moyens de calculs et de commande électrique 15, de diminution ou d'augmentation du débit D de fonctionnement, une vérification que ce débit D n'est pas, respectivement, à son débit minimal Dmin de fonctionnement, ou à son débit maximal Dmax de fonctionnement est effectuée.

Ainsi, lorsque le débit de fonctionnement D est déjà au minimum ou au maximum, la valeur du débit est maintenue à son minimum ou à son maximum, selon le cas.

Tout préférentiellement, la pression moyenne Pmoy est calculée sur un intervalle de temps de 5 secondes ou moins, de préférence sur un intervalle de temps de 1 seconde.

Préférentiellement, de manière similaire à la régulation par palier, préalablement à la réalisation des étapes de mesures régulières et de réalisation de moyennes de la pression effective P, puis de régulation du débit D de la pompe hydraulique 10, telles qu'elles ont été décrites ci-dessus, dans le cadre de la régulation linéaire, les opérations suivantes sont réalisées :
- Vérification de la transmission d'une information par le capteur de pression 14 et vérification que la valeur de pression mesurée et transmise par ledit capteur 14 est supérieure ou égale à une pression minimum Pmin ;
- Si ledit capteur de pression 14 transmet une information et que la valeur de pression mesurée est supérieure à Pmin, activation de la régulation linéaire de la vitesse du rotor 7 ;
- Il est également envisageable, tout préférentiellement, de vérifier ensuite que le programme de régulation de la vitesse du rotor 7 en fonction de la charge est correctement activé ;
- Selon le résultat des étapes de vérification précédentes, s'il est détecté que le capteur de pression 14 ne transmet pas d'information, ou si l'information transmise correspond à une pression inférieure à Pmin, ou si la régulation de la vitesse du rotor 7 en fonction de la charge n'est pas activée, le débit nominal Dnom de fonctionnement de la pompe hydraulique 10 est appliqué.

En d'autres termes, tout préférentiellement, le procédé de régulation linéaire de la vitesse de rotation du rotor 7, en référence à la figure 4, peut être appliqué comme suit :
- A) Vérification que le capteur de pression 14 est activé ;
- B) Vérification que la pression mesurée est supérieure à une pression minimum pour s'assurer du fonctionnement du capteur 14. Si c'est le cas la régulation proportionnelle à la charge RPC est activée ;
- C) Activation de la RPC et application du débit nominal de la pompe 10 comme débit initial.
- D) Si le capteur 14 n'est pas activé, la régulation RPC n'est pas activée.
- E) Vérification que la régulation RPC est activée (RPC=1).
- F) Vérification que la pression P a été mesurée et moyennée sur 1s (ceci permet de filtrer le signal de pression et de ne pas réagir de manière trop brutale à des pics de pressions très courts).
- G) Comparaison de la pression mesurée sur 1s avec deux valeurs de pression **▲**P' légèrement décalées de P0 (notées ▲Plnférieur et ▲PSupérieur sur le diagramme) afin de ne pas réguler dans le cas où la pression mesurée soit déjà très proche de P0.
- H) Si la régulation RPC n'est pas activée, commande de la pompe 10 avec le débit nominal de l'outil (fixe).
- I) Si toutes les conditions sont réunies, on applique le calcul DO = P / P0 X Débit RPC. Le Débit RPC est le débit actuel appliqué à la pompe, le DO est le débit calculé à atteindre si les autres conditions sont respectées. Un facteur D peut avantageusement être appliqué au calcul, mails il n'est pas obligatoire ; il s'agit d'une valeur modifiable par l'utilisateur qui permet de régler la réactivité du système. La valeur de D peut être comprise entre 0,2 et 1,8. Lorsque l'utilisateur applique un facteur de 0,2 dans le calcul du débit, il est probable que le pilotage de la pompe reste au minimum avec un régime rotor le plus faible possible. Si l'utilisateur applique un facteur de 1,8 dans le calcul du débit, il est probable que le pilotage de la pompe reste au maximum avec un régime rotor au maximum. Cela permet à l'utilisateur de choisir entre une régulation plutôt orientée vers les hauts régimes ou l'inverse.
- J)/K)/L)/M) : Comparaison du débit DO calculé avec les minimums et maximums, si le DO dépasse une des deux limites, application de cette valeur limite au débit RPC.
- N) Si la pression mesurée est dans la plage de régulation (pression inférieure à P0-▲ P' et débit supérieur au Dmin, ou pression supérieure à P0+▲P' débit inférieur au Dmax), application de DO au débit RPC.
- O) Application de la consigne à la pompe 10.

Selon un exemple de réalisation particulièrement avantageux du procédé de régulation de la vitesse de rotation d'un rotor 7 d'une FDBA 1, en plus d'une adaptation en fonction de la charge, ou RPC, la régulation s'effectue également en fonction de la vitesse d'avancement V du véhicule porteur 2 de ladite FDBA 1, ou RPA.

Dans le cas d'une régulation à la fois selon la charge et selon l'avancement, ledit véhicule porteur 2 est équipé d'un moyen de mesure 16 de ladite vitesse d'avancement, de préférence sous la forme d'un capteur de vitesse 16 situé sur le véhicule porteur 2.

Cela étant la mesure de la vitesse dudit véhicule porteur 2 peut également être effectuée par d'autres moyens, notamment via une antenne GPS ou, dans le cas d'un porteur 2 dont l'avancement est hydraulique (hydrostatique par exemple), par un débitmètre

En plus des étapes définies ci-dessus en rapport avec la régulation de la vitesse de rotation du rotor 7 en fonction de la charge, le procédé de régulation de rotation selon la charge et selon la vitesse d'avancement du véhicule porteur 2 comporte, les étapes suivantes :
- Définition d'au moins cinq valeurs de débit de fonctionnement de la pompe hydraulique 10 à savoir un débit minimum Dmin, au moins trois débits intermédiaire Dint1, Dint2 et Dint3 avec Dint1<Dint2<Dint3 et Dmin<Dint1, et un débit maximum Dmax, avec Dmax>Dint3, à appliquer à ladite pompe 10 selon la vitesse d'avancement du véhicule porteur 2 ;
- Réalisation de mesures, à intervalles de temps réguliers, de la vitesse V d'avancement dudit véhicule porteur 2 ;
- Définition d'une corrélation entre la vitesse d'avancement V du véhicule porteur et le débit à appliquer à ladite pompe hydraulique 10, selon les considérations suivantes :
   - Si la vitesse V est inférieure à une vitesse minimale Vmin, application du débit minimum Dmin ;
   - Si V est comprise entre une première vitesse intermédiaire V1int1, avec V1int1 supérieure ou égale à Vmin et une deuxième vitesse intermédiaire V2int1, avec V2int1>V1int1, application du premier débit intermédiaire Dint1 ;
   - Si V est comprise entre une troisième vitesse intermédiaire V1int2, avec V1int2 supérieure à V2int1, et une quatrième vitesse intermédiaire V2int2, V2int2>V1int2, application du deuxième débit intermédiaire Dint2 ;
   - Si V est comprise entre une cinquième vitesse intermédiaire V1int3, avec V1int3 supérieure à V2int2, et une sixième vitesse intermédiaire V2int3, avec V2int3>V1int3, application du troisième débit intermédiaire Dint3 ;
   - Si V est supérieure à une vitesse minimale Vmax, avec Vmax > V2int3, application du débit maximum Dmax.

La valeur du débit D à appliquer à la pompe hydraulique 10 est ensuite comparée, entre la valeur de régulation déterminée selon la vitesse d'avancement V du véhicule 2, et la valeur de régulation déterminée selon la charge de matière végétale 13 à faucher.

En d'autres termes, une comparaison finale, avant de commander la pompe hydraulique 10, applique le débit calculé le plus important.

Tout préférentiellement, préalablement à mise en œuvre des étapes susmentionnées pour faire varier la vitesse de rotation du rotor 7 en fonction de la vitesse d'avancement V, on vérifie que le capteur de vitesse 16 envoie une information.

Si tel n'est pas le cas, seules les étapes de régulation selon la charge sont effectuées, dans la mesure où le capteur de pression 14 fonctionne.

Plus particulièrement, selon un exemple de réalisation du procédé de régulation de la vitesse de rotation du rotor 7 en fonction de la charge et de l'avancement, décrit en référence à la figure 5, ce procédé met en œuvre, en plus des étapes mises en œuvre pour une régulation selon la charge, par palier ou linéaire, les étapes suivantes :
- a1 : vérification que le capteur de vitesse 16 envoie une information ;
- b1 : Si ce n'est pas le cas, application d'un débit nul à la valeur de débit pour la régulation par rapport à l'avancement (RPA) ;
- c1 : vérification que le capteur de pression 14 fonctionne ;
- d1 : Si c'est le cas, application du débit déterminé par les étapes de régulation de la vitesse du rotor 7 selon la charge RPC (voir les descriptions des deux régulations ci-dessus), sinon pilotage de la pompe 10 avec le débit nominal (débit pompe) ;
- e1/h1/i1/k1 : Si le capteur de vitesse 16 envoie une information, interrogation de la valeur de vitesse pour connaitre la vitesse d'avance actuelle ;
- f1 : si vitesse du véhicule 2 inférieure à 10 km/h (Vmax), pas d'application du débit maximum Dmax ;
- g1 : Si vitesse du véhicule 2 supérieure à 10 km/h (Vmax), application du débit maximum Dmax (par exemple fixé à106 L/min) ;
- j1 : Si vitesse du véhicule 2 comprise entre 7 km/h et 10 km/h (Vint3), application d'une valeur intermédiaire de débit Dint3, par exemple un débit de 103 L/min ;
- I1 : Si vitesse du véhicule 2 comprise entre 4 km/h et 7 km/h (Vint2), application d'une valeur intermédiaire de débit Dint2, par exemple un débit de 96 l/min ;
- n1 : Si vitesse du véhicule 2 comprise entre 1 km/h et 4 km/h (Vint1), application d'une valeur intermédiaire de débit Dint1, par exemple un débit de 86 I/min ;
- m1 : Si vitesse du véhicule 2 inférieure à 1 km/h (Vmin), application du débit minimum Dmin, dont la valeur peut être fixée par exemple à 62 I/min ;
- o1/p1/q1 : comparaison des valeurs des deux régulations (charge et avancement) et pilotage de la pompe 10 avec le plus grand des débits.

La présente invention est également relative à un dispositif de régulation de la vitesse de rotation d'un rotor 7 d'une faucheuse débroussailleuse 1, au moins en fonction de la charge 13, apte à permettre la mise en œuvre du procédé de régulation de l'invention tel que détaillé ci-dessus.

Pour rappel, le rotor 7 équipe un groupe de fauche 6 de la faucheuse débroussailleuse 1, et comporte une pluralité de moyens de coupe 8, notamment sous la forme de fléaux 8.

Un tel dispositif de régulation est applicable à une faucheuse débroussailleuse 1 dont les caractéristiques ont été décrites précédemment.

Ce dispositif de régulation est particulier en ce qu'il comporte, au moins, un moyen de mesure de la pression, sous la forme préférentiellement d'au moins un capteur de pression 14, positionné au niveau de l'un des éléments composant le circuit hydraulique de la faucheuse débroussailleuse 1

En d'autres termes, le capteur de pression 14 est plus particulièrement localisé au niveau de la pompe hydraulique 10 et/ou du circuit hydraulique 11 et/ou du moteur hydraulique 12, au niveau du circuit d'entrainement en rotation du rotor 7 du groupe de fauche 6. Ainsi un ou plusieurs capteur(s) de pression peu(ven)t être présent(s).

En outre, ledit dispositif de régulation incorpore également des moyens de pilotage électronique 15 de la pompe hydraulique 10 d'entrainement du moteur hydraulique 12, lui-même entrainant en rotation le rotor 7 du groupe de fauche 6.

Ces moyens de pilotage 15 incluent des moyens de calcul et de commande en fonction de la charge de matériel végétal à faucher, ainsi que des moyens de communication et de transmission de l'information entre ledit au moins un capteur de pression 14 et lesdits moyens de pilotage, et entre ces derniers et ladite pompe hydraulique 10 pour la régulation du débit de cette dernière en sorte de contrôler, *in fine,* la vitesse de rotation du rotor 7 et donc des moyens de coupes (fléaux etc.) qu'il porte.

Tout préférentiellement, ledit dispositif de régulation de la vitesse de rotation du rotor 7 permet également une régulation en fonction de la vitesse d'avancement du véhicule 2, en plus de la régulation selon la charge, et comporte, alors, au moins un moyen de mesure 16 de la vitesse dudit véhicule 2, avantageusement sous la forme d'un capteur de vitesse 16.

La présente invention a été décrite en détails ci-dessus en lien avec une régulation de la vitesse de rotation d'un rotor par une modification du débit d'une pompe dans le cadre d'une faucheuse débroussailleuse à bras articulé à fonctionnement hydraulique.

Cela étant, il est également envisageable de réguler proportionnellement la vitesse de rotation du rotor en fonction de la charge de matière végétale appliquée à celui-ci, indépendamment de la grandeur physique qui permet de traduire cette charge.

En d'autres termes, une régulation du régime du rotor peut être effectuée avec le moyen correspondant à la machine, c'est-à-dire avec le débit en hydraulique, avec la tension ou la fréquence en électrique, ou bien encore avec le régime du moteur thermique en mécanique, en utilisant une jauge de déformation sur un arbre qui transmet l'effort au rotor.

## Revendications

1. Procédé de régulation de la vitesse de rotation d'un rotor (7) d'un moteur hydraulique (12) d'un groupe de fauche (6) d'une faucheuse débroussailleuse (1) alimenté, via un circuit hydraulique (11), par une pompe hydraulique (10) pilotée électriquement et entrainée par une prise de force (9) transmettant le couple des moyens moteurs (3) d'un véhicule (2), ladite régulation étant effectuée par le pilotage du débit de ladite pompe hydraulique (10) à partir d'un débit initial D de fonctionnement compris entre un débit minimal de fonctionnement Dmin et un débit maximal de fonctionnement Dmax, ledit procédé étant **caractérisé en ce qu'**il est apte à permettre une variation de la vitesse de rotation dudit rotor (7) au moins en fonction de la charge de matière végétale (13) à faucher, et **en ce qu'**il comporte, au moins, les étapes suivantes, prises dans l'ordre :
- Définition d'une pression de référence P0 de ladite pompe hydraulique (10), ainsi qu'au moins une valeur de variation de la pression ▲P par rapport à la pression de référence P0, et une valeur de variation du débit **A** D de fonctionnement de la pompe hydraulique (10) ;
- Réalisation de mesures, à intervalles de temps réguliers, de la pression effective P au moyen d'au moins un capteur de pression (14) équipant ladite pompe hydraulique (10) et/ou le circuit hydraulique (11) et/ou le moteur hydraulique (12) ;
- Si la pression effective mesurée P est inférieure à P0 - ▲P, diminution du débit D de fonctionnement de ladite pompe hydraulique (10) de la valeur ▲D**,** en sorte de réduire la vitesse de rotation du rotor (7) ;
- Vérification du débit D de fonctionnement de la pompe hydraulique (10) par rapport à son débit minimal de fonctionnement Dmin et, si le débit D est déjà égal à Dmin, maintien la valeur de débit au minimum ;
- Si la pression effective mesurée P est supérieure à P0 + ▲P, augmentation du débit D de fonctionnement de ladite pompe hydraulique (10) de la valeur **▲**D, en sorte d'accroître la vitesse de rotation du rotor (7) ;
- Vérification du débit D de fonctionnement de la pompe hydraulique (10) par rapport à son débit maximal de fonctionnement Dmax et, si le débit D est déjà égal à Dmax, maintien de la valeur de débit au maximum ;
- Si la pression effective mesurée P est comprise entre P0 - ▲P et P0 + ▲P, maintien du débit D de fonctionnement de ladite pompe hydraulique (10) ;
- Envoi de signaux de commande électriques à ladite pompe hydraulique (10) avec la consigne de diminution, d'augmentation, ou de maintien du débit D de fonctionnement selon les étapes précédentes ;
- Répétition des étapes ci-dessus, de mesure de la pression effective P et de régulation du débit D, en boucle autant de fois que nécessaires à la durée de l'opération de fauchage de la matière végétale (13).

2. Procédé de régulation de la vitesse de rotation d'un rotor (7) d'une faucheuse débroussailleuse (1) en fonction de la charge de matière végétale à faucher (13) selon la revendication 1 **caractérisé en ce que** la régulation s'effectue par paliers, et dans lequel :
- En plus de P0 et **▲**D, définition d'une première valeur de variation de la pression ▲P1 et une deuxième valeur de variation de la pression ▲P2, par rapport à la pression de référence P0, avec ▲P2 supérieure à ▲P1 ;
- Réalisation de mesures, à intervalles de temps réguliers, de la pression effective P au moyen dudit au moins un capteur de pression (14) et comparaison de la pression à P0 - ▲P1 ;
- Si la pression effective mesurée P est supérieure ou égale à P0 - AP1, vérification si elle est supérieure à P0 + ▲P2 ;
- Si la pression effective mesurée P est inférieure à P0 - ▲P1, commande électrique de ladite pompe hydraulique (10) en sorte de diminuer le débit D de fonctionnement de la valeur ▲D, et réduire la vitesse de rotation du rotor (7) ;
- Si la pression effective mesurée est supérieure à P0 + ▲P2, commande électrique de ladite pompe hydraulique (10) en sorte d'augmenter le débit D de fonctionnement de la valeur ▲D, et d'accroître la vitesse de rotation du rotor (7) ;
- Si la pression effective mesurée P est comprise entre P0 - **▲**P1 et P0 + ▲P2, maintien du débit D de fonctionnement de ladite pompe hydraulique (10).

3. Procédé de régulation de la vitesse de rotation d'un rotor (7) d'une faucheuse débroussailleuse (1) en fonction de la charge de matière végétale à faucher (13) et par paliers selon la revendication 2 **caractérisé en ce que** ▲P1 est comprise entre 0,5 et 1,5 bar, de préférence égale à 1 bar.

4. Procédé de régulation de la vitesse de rotation d'un rotor (7) d'une faucheuse débroussailleuse (1) en fonction de la charge de matière végétale à faucher (13) et par paliers selon la revendication 2 ou la revendication 3 **caractérisé en ce que ▲**P2 est comprise entre 8 et 12 bar, de préférence égale à 10 bar.

5. Procédé de régulation de la vitesse de rotation d'un rotor (7) d'une faucheuse débroussailleuse (1) en fonction de la charge de matière végétale à faucher (13) et par paliers selon l'une quelconque des revendications précédentes **caractérisé en ce que** la mesure de la pression effective P au moyen dudit au moins un capteur de pression (14) est effectuée toutes les 5 secondes ou moins, de préférence toutes les secondes.

6. Procédé de régulation de la vitesse de rotation d'un rotor (7) d'une faucheuse débroussailleuse (1) en fonction de la charge de matière végétale à faucher (13) selon la revendication 1 **caractérisé en ce que** la régulation est linéaire, et dans lequel :
- La valeur de variation de la pression **▲**P par rapport à la pression de référence P0 est notée **▲**P' et est comprise entre 0 et 1 bar, et la valeur de variation du débit **▲**D est définie par calcul selon la formule |D0 - D|, D étant le débit de fonctionnement de la pompe hydraulique et D0 étant le débit à atteindre calculé selon la formule : (P/P0)*D, P étant la pression mesurée au moyen dudit au moins un capteur et P0 la pression de référence P0 de ladite pompe hydraulique (10) ;
- Réalisation de mesures, à intervalles de temps réguliers, de la pression effective P au moyen dudit au moins un capteur de pression (14) et calcul d'une pression moyenne Pmoy sur cet intervalle de temps ;
- Si la pression effective moyenne mesurée Pmoy est inférieure à P0 - **▲**P', diminution du débit D de fonctionnement de ladite pompe hydraulique (10) de la valeur ▲D, en sorte d'atteindre le débit D0 calculé et de réduire la vitesse de rotation du rotor (7) ;
- Vérification que le débit D de fonctionnement de la pompe hydraulique (10) n'est pas à son débit minimal de fonctionnement Dmin et, si le débit D est déjà égal à Dmin, maintien de la valeur de débit au minimum ;
- Si la pression effective moyenne mesurée Pmoy est supérieure à P0 + ▲P', augmentation du débit D de fonctionnement de ladite pompe hydraulique (10) de la valeur **▲**D, en sorte d'atteindre le débit D0 calculé et d'accroître la vitesse de rotation du rotor (7) ;
- Vérification que le débit D de fonctionnement de la pompe hydraulique (10) n'est pas à son débit maximal de fonctionnement Dmax et, si le débit D est déjà égal à Dmax, maintien de la valeur de débit au maximum ;
- Si la pression effective mesurée P est comprise entre P0 - ▲P' et P0 + ▲P', maintien du débit D de fonctionnement de ladite pompe hydraulique (10) ;
- Envoi de signaux de commande électriques à ladite pompe hydraulique (10) avec la consigne de diminution, d'augmentation, ou de maintien du débit D de fonctionnement selon les étapes précédentes.

7. Procédé de régulation de la vitesse de rotation d'un rotor (7) d'une faucheuse débroussailleuse (1) en fonction de la charge de matière végétale à faucher (13) et linéaire selon la revendication précédente **caractérisé en ce que** la pression moyenne Pmoy est calculée sur un intervalle de temps de 5 secondes ou moins, de préférence sur un intervalle de temps de 1 seconde.

8. Procédé de régulation de la vitesse de rotation d'un rotor (7) d'une faucheuse débroussailleuse (1) en fonction de la charge de matière végétale à faucher (13) selon l'une quelconque des revendications précédentes **caractérisé en ce qu'**une vérification de la transmission d'une information par ledit capteur de pression (14) est effectué et vérification que la valeur de pression mesurée par ledit capteur (14) est supérieure ou égale à une pression minimum Pmin, préalablement à la réalisation des étapes de mesures régulières de pression effective P et de régulation du débit D de la pompe hydraulique (10) et :
- Si le capteur de pression (14) transmet une information et que la valeur de pression mesurée est supérieure à Pmin, activation de la régulation de la vitesse du rotor (7) en fonction de la charge de matière végétale à faucher ;
- Vérification que la régulation de la vitesse du rotor (7) est activée, et
- Si le capteur de pression (14) ne transmet pas d'information ou si la pression mesurée par ledit capteur (14) est inférieure à Pmin, ou si la régulation de la vitesse du rotor (7) n'est pas activée, application d'un débit nominal Dnom de fonctionnement de la pompe hydraulique (10).

9. Procédé de régulation de la vitesse de rotation d'un rotor (7) d'une faucheuse débroussailleuse (1) en fonction de la charge de matière végétale à faucher (13) et en fonction de la vitesse d'avancement du véhicule (2) équipé d'un moyen de mesure (16) de ladite vitesse d'avancement, selon l'une quelconque des revendications précédentes, **caractérisé en ce qu'**il comporte, en plus, les étapes suivantes :
- Définition d'au moins cinq valeurs de débit de fonctionnement de la pompe hydraulique (10) à savoir un débit minimum Dmin, au moins trois débits intermédiaire Dint1, Dint2 et Dint3 avec Dint1<Dint2<Dint3 et Dmin<Dint1, et un débit maximum Dmax, avec Dmax>Dint3, à appliquer à ladite pompe (10) selon la vitesse d'avancement du véhicule (2) ;
- Réalisation de mesures, à intervalles de temps réguliers, de la vitesse V d'avancement du véhicule (2) ;
- Définition d'une corrélation entre la vitesse d'avancement V du véhicule et le débit à appliquer à ladite pompe hydraulique (10), comme suit :
o Si V est inférieure à une vitesse minimale Vmin, application du débit minimum Dmin ;
o Si V est comprise entre une première vitesse intermédiaire V1int1, avec V1int1 supérieure ou égale à Vmin et une deuxième vitesse intermédiaire V2int1, avec V2int1>V1int1, application du premier débit intermédiaire Dint1 ;
o Si V est comprise entre une troisième vitesse intermédiaire V1int2, avec V1int2 supérieure à V2int1, et une quatrième vitesse intermédiaire V2int2, V2int2>V1int2, application du deuxième débit intermédiaire Dint2 ;
o Si V est comprise entre une cinquième vitesse intermédiaire V1int3, avec V1int3 supérieure à V2int2, et une sixième vitesse intermédiaire V2int3, avec V2int3>V1int3, application du troisième débit intermédiaire Dint3 ;
o Si V est supérieure à une vitesse minimale Vmax, avec Vmax > V2int3, application du débit maximum Dmax ;
- Comparaison entre les valeurs de régulation du débit D du fonctionnement de la pompe hydraulique (10) déterminé par rapport à la charge et de régulation du débit par rapport à la vitesse d'avancement V du véhicule (2) et pilotage de ladite pompe (10) avec le plus grand des deux débits.

10. Faucheuse débroussailleuse (1) comprenant un groupe de fauche (6) équipé d'un rotor (7) et le rotor (7) comportant une pluralité de moyens de coupe (8), ladite faucheuse débroussailleuse (1) étant par ailleurs équipée d'une pompe hydraulique (10) alimentant en fluide comprimé, via un circuit hydraulique (11), un moteur hydraulique (12) que comporte le groupe de fauche (6) de ladite faucheuse débroussailleuse (1), cette dernière étant par ailleurs **caractérisée en ce qu'**elle comporte un dispositif de régulation de la vitesse de rotation dudit rotor (7) au moins en fonction de la charge de matière végétale (13) à faucher, configuré pour mettre en œuvre du procédé selon l'une quelconque des revendications précédentes, ledit dispositif de régulation comportant au moins un moyen de mesure de la pression (14) positionné au niveau de la pompe hydraulique (10) et/ou du circuit hydraulique (11) et/ou du moteur hydraulique (12) d'entraînement en rotation du rotor (7) du groupe de fauche (6) de la faucheuse débroussailleuse (1), ledit dispositif de régulation comportant en outre, au moins, des moyens de pilotage électronique (15) de la pompe hydraulique (10) d'entraînement du moteur hydraulique (12) d'entraînement en rotation du rotor (7) du groupe de fauche (6), lesdits moyens de pilotage électronique (15) incluant des moyens de calcul et de commande en fonction de la charge, ainsi que des moyens de communication et de transmission de l'information entre ledit au moins un moyen de mesure de la pression (14) et lesdits moyens de pilotage (15), et entre ces derniers et ladite pompe hydraulique (10) pour la régulation du débit de cette dernière.

## Patentansprüche

1. Verfahren zur Regelung der Drehzahl eines Rotors (7) eines Hydraulikmotors (12) eines Mähwerks (6) eines Böschungsmähers (1), der über einen Hydraulikkreislauf (11) von einer elektrisch gesteuerten Hydraulikpumpe (10) gespeist wird, die von einer Zapfwelle (9) angetrieben wird, die das Drehmoment der Motorisierungsmittel (3) eines Fahrzeugs (2) überträgt, wobei die Regelung durch die Steuerung des Durchflusses der Hydraulikpumpe (10) ausgehend von einem anfänglichen Betriebsdurchfluss D zwischen einem minimalen Betriebsdurchfluss Dₘᵢₙ und einem maximalen Betriebsdurchfluss Dₘₐₓ erfolgt, wobei das Verfahren **dadurch gekennzeichnet ist, dass** es geeignet ist, eine Änderung der Drehzahl des Rotors (7) zumindest in Abhängigkeit von der Last an zu mähendem Pflanzenmaterial (13) zu ermöglichen, und dass es zumindest die folgenden, in dieser Reihenfolge durchgeführten Schritte umfasst:
• Definieren eines Referenzdrucks P₀ der Hydraulikpumpe (10) sowie mindestens eines Druckänderungswerts ▲P in Bezug auf den Referenzdruck P₀ und eines Betriebsdurchflussänderungswerts ▲D der Hydraulikpumpe (10);
• Durchführen von Messungen des Effektivdrucks P in regelmäßigen Zeitabständen mittels mindestens eines Drucksensors (14), mit dem die Hydraulikpumpe (10) und/oder der Hydraulikkreislauf (11) und/oder der Hydraulikmotor (12) ausgestattet ist;
• wenn der gemessene Effektivdruck P kleiner als P₀ - ▲P ist, Verringern des Betriebsdurchflusses D der Hydraulikpumpe (10) um den Wert ▲D, um die Drehzahl des Rotors (7) zu verringern;
• Überprüfen des Betriebsdurchflusses D der Hydraulikpumpe (10) in Bezug auf ihren minimalen Betriebsdurchfluss Dₘᵢₙ und, wenn der Durchfluss D bereits gleich Dₘᵢₙ ist, Beibehalten des Durchflusswerts auf dem Minimum;
• wenn der gemessene Effektivdruck P größer als P₀ + ▲P ist, Erhöhen des Betriebsdurchflusses D der Hydraulikpumpe (10) um den Wert ▲D, um die Drehzahl des Rotors (7) zu erhöhen;
• Überprüfen des Betriebsdurchflusses D der Hydraulikpumpe (10) in Bezug auf ihren maximalen Betriebsdurchfluss Dₘₐₓ und, wenn der Durchfluss D bereits gleich Dₘₐₓ ist, Beibehalten des Durchflusswerts auf dem Maximum;
• wenn der gemessene Effektivdruck P zwischen P₀ - ▲P und P₀ + ▲P liegt, Beibehalten des Betriebsdurchflusses D der Hydraulikpumpe (10);
• Senden von elektrischen Steuersignalen an die Hydraulikpumpe (10) mit der Vorgabe zur Verringerung, Erhöhung oder Beibehaltung des Betriebsdurchflusses D gemäß den vorhergehenden Schritten;
• Wiederholen der obigen Schritte zur Messung des Effektivdrucks P und zur Regelung des Durchflusses D in einer Schleife so oft wie für die Dauer des Mähvorgangs des Pflanzenmaterials (13) erforderlich.

2. Verfahren zur Regelung der Drehzahl eines Rotors (7) eines Böschungsmähers (1) in Abhängigkeit von der Last an zu mähendem Pflanzenmaterial (13) nach Anspruch 1, **dadurch gekennzeichnet, dass** die Regelung stufenweise erfolgt, und wobei:
• zusätzlich zu P₀ und ▲D, Definieren eines ersten Druckänderungswerts ▲P₁ und eines zweiten Druckänderungswerts ▲P₂ in Bezug auf den Referenzdruck P₀, wobei ▲P₂ größer als ▲P₁ ist;
• Durchführen von Messungen des Effektivdrucks P in regelmäßigen Zeitabständen mittels des mindestens einen Drucksensors (14) und Vergleichen des Drucks mit P₀ - ▲P₁;
• wenn der gemessene Effektivdruck P größer als oder gleich P₀ - ▲P₁ ist, Überprüfen, ob er größer als P₀ + ▲P₂ ist;
• wenn der gemessene Effektivdruck P kleiner als P₀ - ▲P₁ ist, elektrisches Ansteuern der Hydraulikpumpe (10), um den Betriebsdurchfluss D um den Wert ▲D zu verringern und die Drehzahl des Rotors (7) zu verringern;
• wenn der gemessene Effektivdruck größer als P₀ + ▲P₂ ist, elektrisches Ansteuern der Hydraulikpumpe (10), um den Betriebsdurchfluss D um den Wert ▲D zu erhöhen und die Drehzahl des Rotors (7) zu erhöhen;
• wenn der gemessene Effektivdruck P zwischen P₀ - ▲P₁ und P₀ + ▲P₂ liegt, Beibehalten des Betriebsdurchflusses D der Hydraulikpumpe (10).

3. Verfahren zur Regelung der Drehzahl eines Rotors (7) eines Böschungsmähers (1) in Abhängigkeit von der Last an zu mähendem Pflanzenmaterial (13) und stufenweise nach Anspruch 2, **dadurch gekennzeichnet, dass** ▲P₁ zwischen 0,5 und 1,5 bar liegt, vorzugsweise gleich 1 bar ist.

4. Verfahren zur Regelung der Drehzahl eines Rotors (7) eines Böschungsmähers (1) in Abhängigkeit von der Last an zu mähendem Pflanzenmaterial (13) und stufenweise nach Anspruch 2 oder Anspruch 3, **dadurch gekennzeichnet, dass** ▲P₂ zwischen 8 und 12 bar liegt, vorzugsweise gleich 10 bar ist.

5. Verfahren zur Regelung der Drehzahl eines Rotors (7) eines Böschungsmähers (1) in Abhängigkeit von der Last an zu mähendem Pflanzenmaterial (13) und stufenweise nach einem der vorhergehenden Ansprüche, **dadurch gekennzeichnet, dass** die Messung des Effektivdrucks P mittels des mindestens einen Drucksensors (14) alle 5 Sekunden oder weniger, vorzugsweise sekündlich, durchgeführt wird.

6. Verfahren zur Regelung der Drehzahl eines Rotors (7) eines Böschungsmähers (1) in Abhängigkeit von der Last an zu mähendem Pflanzenmaterial (13) nach Anspruch 1, **dadurch gekennzeichnet, dass** die Regelung linear ist, und wobei:
• der Druckänderungswert ▲P in Bezug auf den Referenzdruck P₀ mit ▲P' bezeichnet wird und zwischen 0 und 1 bar liegt, und der Durchflussänderungswert ▲D durch Berechnung nach der Formel |D₀ - D| definiert ist, wobei D der Betriebsdurchfluss der Hydraulikpumpe ist und D₀ der zu erreichende Durchfluss ist, berechnet nach der Formel: (P/P₀)*D, wobei P der mittels des mindestens einen Sensors gemessene Druck und P₀ der Referenzdruck P₀ der Hydraulikpumpe (10) ist;
• Durchführen von Messungen des Effektivdrucks P in regelmäßigen Zeitabständen mittels des mindestens einen Drucksensors (14) und Berechnen eines mittleren Drucks P_{moy} über dieses Zeitintervall;
• wenn der gemessene mittlere Effektivdruck P_{moy} kleiner als P₀ - ▲P' ist, Verringern des Betriebsdurchflusses D der Hydraulikpumpe (10) um den Wert ▲D, um den berechneten Durchfluss D₀ zu erreichen und die Drehzahl des Rotors (7) zu verringern;
• Überprüfen, dass der Betriebsdurchfluss D der Hydraulikpumpe (10) nicht bei ihrem minimalen Betriebsdurchfluss Dₘᵢₙ liegt, und wenn der Durchfluss D bereits gleich Dₘᵢₙ ist, Beibehalten des Durchflusswerts auf dem Minimum;
• wenn der gemessene mittlere Effektivdruck P_{moy} größer als P₀ + ▲P' ist, Erhöhen des Betriebsdurchflusses D der Hydraulikpumpe (10) um den Wert ▲D, um den berechneten Durchfluss D₀ zu erreichen und die Drehzahl des Rotors (7) zu erhöhen;
• Überprüfen, dass der Betriebsdurchfluss D der Hydraulikpumpe (10) nicht bei ihrem maximalen Betriebsdurchfluss Dₘₐₓ liegt, und wenn der Durchfluss D bereits gleich Dₘₐₓ ist, Beibehalten des Durchflusswerts auf dem Maximum;
• wenn der gemessene Effektivdruck P zwischen P₀ - ▲P' und P₀ + ▲P' liegt, Beibehalten des Betriebsdurchflusses D der Hydraulikpumpe (10);
• Senden von elektrischen Steuersignalen an die Hydraulikpumpe (10) mit der Vorgabe zur Verringerung, Erhöhung oder Beibehaltung des Betriebsdurchflusses D gemäß den vorhergehenden Schritten.

7. Verfahren zur Regelung der Drehzahl eines Rotors (7) eines Böschungsmähers (1) in Abhängigkeit von der Last an zu mähendem Pflanzenmaterial (13) und linear nach dem vorhergehenden Anspruch, **dadurch gekennzeichnet, dass** der mittlere Druck P_{moy} über ein Zeitintervall von 5 Sekunden oder weniger, vorzugsweise über ein Zeitintervall von 1 Sekunde, berechnet wird.

8. Verfahren zur Regelung der Drehzahl eines Rotors (7) eines Böschungsmähers (1) in Abhängigkeit von der Last an zu mähendem Pflanzenmaterial (13) nach einem der vorhergehenden Ansprüche, **dadurch gekennzeichnet, dass** vor dem Durchführen der Schritte der regelmäßigen Messungen des Effektivdrucks P und der Regelung des Durchflusses D der Hydraulikpumpe (10) eine Überprüfung der Übertragung einer Information durch den Drucksensor (14) und eine Überprüfung, ob der vom Sensor (14) gemessene Druckwert größer als oder gleich einem Mindestdruck Pₘᵢₙ ist, durchgeführt wird und:
• wenn der Drucksensor (14) eine Information überträgt und der gemessene Druckwert größer als Pₘᵢₙ ist, Aktivieren der Regelung der Drehzahl des Rotors (7) in Abhängigkeit von der Last an zu mähendem Pflanzenmaterial;
• Überprüfen, ob die Regelung der Drehzahl des Rotors (7) aktiviert ist, und
• wenn der Drucksensor (14) keine Information überträgt oder wenn der von dem Sensor (14) gemessene Druck kleiner als Pₘᵢₙ ist, oder wenn die Regelung der Drehzahl des Rotors (7) nicht aktiviert ist, Anwenden eines Nennbetriebsdurchflusses Dₙₒₘ der Hydraulikpumpe (10).

9. Verfahren zur Regelung der Drehzahl eines Rotors (7) eines Böschungsmähers (1) in Abhängigkeit von der Last an zu mähendem Pflanzenmaterial (13) und in Abhängigkeit von der Fahrgeschwindigkeit des Fahrzeugs (2), das mit einem Mittel (16) zur Messung der Fahrgeschwindigkeit ausgestattet ist, nach einem der vorhergehenden Ansprüche, **dadurch gekennzeichnet, dass** es zusätzlich die folgenden Schritte umfasst:
• Definieren von mindestens fünf Betriebsdurchflusswerten der Hydraulikpumpe (10), nämlich einem Mindestdurchfluss Dₘᵢₙ, mindestens drei Zwischendurchflüssen Dᵢₙₜ₁, Dᵢₙₜ₂ und Dᵢₙₜ₃, wobei Dᵢₙₜ₁ < Dᵢₙₜ₂ < Dᵢₙₜ₃ und Dₘᵢₙ < Dᵢₙₜ₁, und einem Maximaldurchfluss Dₘₐₓ, wobei Dₘₐₓ > Dᵢₙₜ₃, die auf die Hydraulikpumpe (10) in Abhängigkeit von der Fahrgeschwindigkeit des Fahrzeugs (2) anzuwenden sind;
• Durchführen von Messungen der Fahrgeschwindigkeit V des Fahrzeugs (2) in regelmäßigen Zeitabständen;
• Definieren einer Korrelation zwischen der Fahrgeschwindigkeit V des Fahrzeugs und dem auf die Hydraulikpumpe (10) anzuwendenden Durchfluss wie folgt:
• wenn V kleiner als eine Mindestgeschwindigkeit Vₘᵢₙ ist, Anwenden des Mindestdurchflusses Dₘᵢₙ;
• wenn V zwischen einer ersten Zwischengeschwindigkeit V₁ᵢₙₜ₁, wobei V₁ᵢₙₜ₁ größer als oder gleich Vₘᵢₙ ist, und einer zweiten Zwischengeschwindigkeit V₂ᵢₙₜ₁, wobei V₂ᵢₙₜ₁ > V₁ᵢₙₜ₁, liegt, Anwenden des ersten Zwischendurchflusses Dᵢₙₜ₁;
• wenn V zwischen einer dritten Zwischengeschwindigkeit V₁ᵢₙₜ₂, wobei V₁ᵢₙₜ₂ größer als V₂ᵢₙₜ₁ ist, und einer vierten Zwischengeschwindigkeit V₂ᵢₙₜ₂, wobei V₂ᵢₙₜ₂ > V₁ᵢₙₜ₂, liegt, Anwenden des zweiten Zwischendurchflusses Dᵢₙₜ₂;
• wenn V zwischen einer fünften Zwischengeschwindigkeit V₁ᵢₙₜ₃, wobei V₁ᵢₙₜ₃ größer als V₂ᵢₙₜ₂ ist, und einer sechsten Zwischengeschwindigkeit V₂ᵢₙₜ₃, wobei V₂ᵢₙₜ₃ > V₁ᵢₙₜ₃, liegt, Anwenden des dritten Zwischendurchflusses Dᵢₙₜ₃;
• wenn V größer als eine Mindestgeschwindigkeit Vₘₐₓ ist, wobei Vₘₐₓ > V₂ᵢₙₜ₃, Anwenden des Maximaldurchflusses Dₘₐₓ;
• Vergleichen der ermittelten lastabhängigen Werte der Regelung des Durchflusses D für den Betrieb der Hydraulikpumpe (10) mit den Werten der Regelung des Durchflusses in Bezug auf die Fahrgeschwindigkeit V des Fahrzeugs (2) und Steuern der Pumpe (10) mit dem größeren der beiden Durchflüsse.

10. Böschungsmäher (1), umfassend ein Mähwerk (6), das mit einem Rotor (7) ausgestattet ist, wobei der Rotor (7) eine Vielzahl von Schneidmitteln (8) umfasst, wobei der Böschungsmäher (1) im Übrigen mit einer Hydraulikpumpe (10) ausgestattet ist, die über einen Hydraulikkreislauf (11) einen Hydraulikmotor (12) mit Druckfluid speist, den das Mähwerk (6) des Böschungsmähers (1) umfasst, wobei letzterer im Übrigen **dadurch gekennzeichnet ist, dass** er eine Vorrichtung zur Regelung der Drehzahl des Rotors (7) zumindest in Abhängigkeit von der Last an zu mähendem Pflanzenmaterial (13) umfasst, die so konfiguriert ist, dass sie das Verfahren nach einem der vorhergehenden Ansprüche ausführt, wobei die Regelungsvorrichtung mindestens ein Druckmessmittel (14) umfasst, das im Bereich der Hydraulikpumpe (10) und/oder des Hydraulikkreislaufs (11) und/oder des Hydraulikmotors (12) zum Drehantrieb des Rotors (7) des Mähwerks (6) des Böschungsmähers (1) positioniert ist, wobei die Regelungsvorrichtung außerdem mindestens elektronische Steuermittel (15) der Hydraulikpumpe (10) zum Antrieb des Hydraulikmotors (12) zum Drehantrieb des Rotors (7) des Mähwerks (6) umfasst, wobei die elektronischen Steuermittel (15) Berechnungs- und Befehlsmittel in Abhängigkeit von der Last sowie Mittel zur Kommunikation und Informationsübertragung zwischen dem mindestens einen Druckmessmittel (14) und den Steuermitteln (15) und zwischen letzteren und der Hydraulikpumpe (10) zur Regelung des Durchflusses der letzteren enthalten.

## Claims

1. Method for regulating the rotational speed of a rotor (7) of a hydraulic motor (12) of a mowing unit (6) of a brush mower(1) supplied, via a hydraulic circuit (11), by an electrically controlled hydraulic pump (10) driven by a power take-off (9) transmitting the torque of the engine means (3) of a vehicle (2), said regulation being carried out by controlling the flow rate of said hydraulic pump (10) from an initial operating flow rate D between a minimum operating flow rate Dₘᵢₙ and a maximum operating flow rate Dₘₐₓ, said method being **characterized in that** it is adapted to allow a variation of the rotational speed of said rotor (7) at least as a function of the load of plant matter (13) to be mowed, and **in that** it comprises, at least, the following steps, taken in order:
- Definition of a reference pressure P₀ of said hydraulic pump (10), as well as at least one pressure variation value ▲P relative to the reference pressure P₀, and an operating flow rate variation value ▲D of the hydraulic pump (10);
- Carrying out measurements, at regular time intervals, of the effective pressure P by means of at least one pressure sensor (14) equipping said hydraulic pump (10) and/or the hydraulic circuit (11) and/or the hydraulic motor (12);
- If the measured effective pressure P is less than P₀ - ▲P, decreasing the operating flow rate D of said hydraulic pump (10) by the value ▲D, so as to reduce the rotational speed of the rotor (7);
- Verifying the operating flow rate D of the hydraulic pump (10) relative to its minimum operating flow rate Dₘᵢₙ and, if the flow rate D is already equal to Dₘᵢₙ, maintaining the flow rate value at the minimum;
- If the measured effective pressure P is greater than P₀ + ▲P, increasing the operating flow rate D of said hydraulic pump (10) by the value ▲D, so as to increase the rotational speed of the rotor (7);
- Verifying the operating flow rate D of the hydraulic pump (10) relative to its maximum operating flow rate Dₘₐₓ and, if the flow rate D is already equal to Dₘₐₓ, maintaining the flow rate value at the maximum;
- If the measured effective pressure P is between P₀ - ▲P and P₀ + ▲P, maintaining the operating flow rate D of said hydraulic pump (10);
- Sending electrical control signals to said hydraulic pump (10) with the instruction to decrease, increase, or maintain the operating flow rate D according to the preceding steps;
- Repeating the above steps, of measuring the effective pressure P and of regulating the flow rate D, in a loop as many times as necessary for the duration of the operation of mowing the plant matter (13).

2. Method for regulating the rotational speed of a rotor (7) of a brush mower (1) as a function of the load of plant matter to be mowed (13) according to claim 1, **characterized in that** the regulation is carried out in steps, and wherein:
- In addition to P₀ and ▲D, definition of a first pressure variation value ▲P₁ and a second pressure variation value ▲P₂ relative to the reference pressure P₀, with ▲P₂ being greater than ▲P₁;
- Carrying out measurements, at regular time intervals, of the effective pressure P by means of said at least one pressure sensor (14) and comparison of the pressure with P₀ - ▲P₁;
- If the measured effective pressure P is greater than or equal to P₀ - ▲P₁, verifying whether it is greater than P₀ + ▲P₂;
- If the measured effective pressure P is less than P₀ - ▲P₁, electrically controlling said hydraulic pump (10) so as to decrease the operating flow rate D by the value ▲D, and reduce the rotational speed of the rotor (7);
- If the measured effective pressure is greater than P₀ + ▲P₂, electrically controlling said hydraulic pump (10) so as to increase the operating flow rate D by the value ▲D, and increase the rotational speed of the rotor (7);
- If the measured effective pressure P is between P₀ - ▲P₁ and P₀ + ▲P₂, maintaining the operating flow rate D of said hydraulic pump (10).

3. Method for regulating the rotational speed of a rotor (7) of a brush mower (1) as a function of the load of plant matter to be mowed (13) and in steps according to claim 2, **characterized in that** ▲P₁ is between 0.5 and 1.5 bar, preferably equal to 1 bar.

4. Method for regulating the rotational speed of a rotor (7) of a brush mower (1) as a function of the load of plant matter to be mowed (13) and in steps according to claim 2 or claim 3, **characterized in that** ▲P₂ is between 8 and 12 bar, preferably equal to 10 bar.

5. Method for regulating the rotational speed of a rotor (7) of a brush mower (1) as a function of the load of plant matter to be mowed (13) and in steps according to any one of the preceding claims, **characterized in that** the measurement of the effective pressure P by means of said at least one pressure sensor (14) is carried out every 5 seconds or less, preferably every second.

6. Method for regulating the rotational speed of a rotor (7) of a brush mower (1) as a function of the load of plant matter to be mowed (13) according to claim 1, **characterized in that** the regulation is linear, and wherein:
- The pressure variation value ▲P relative to the reference pressure P₀ is denoted ▲P' and is between 0 and 1 bar, and the flow rate variation value ▲D is defined by calculation according to the formula |D₀ - D|, D being the operating flow rate of the hydraulic pump and D₀ being the target flow rate calculated according to the formula: (P/P₀)*D, P being the pressure measured by means of said at least one sensor and P₀ the reference pressure P₀ of said hydraulic pump (10);
- Carrying out measurements, at regular time intervals, of the effective pressure P by means of said at least one pressure sensor (14) and calculating an average pressure P_{moy} over this time interval;
- If the measured average effective pressure P_{moy} is less than P₀ - ▲P', decreasing the operating flow rate D of said hydraulic pump (10) by the value ▲D, so as to reach the calculated flow rate D₀ and to reduce the rotational speed of the rotor (7);
- Verifying that the operating flow rate D of the hydraulic pump (10) is not at its minimum operating flow rate Dₘᵢₙ and, if the flow rate D is already equal to Dₘᵢₙ, maintaining the flow rate value at the minimum;
- If the measured average effective pressure P_{moy} is greater than P₀ + ▲P', increasing the operating flow rate D of said hydraulic pump (10) by the value ▲D, so as to reach the calculated flow rate D₀ and to increase the rotational speed of the rotor (7);
- Verifying that the operating flow rate D of the hydraulic pump (10) is not at its maximum operating flow rate Dₘₐₓ and, if the flow rate D is already equal to Dₘₐₓ, maintaining the flow rate value at the maximum;
- If the measured effective pressure P is between P₀ - ▲P' and P₀ + ▲P', maintaining the operating flow rate D of said hydraulic pump (10);
- Sending electrical control signals to said hydraulic pump (10) with the instruction to decrease, increase, or maintain the operating flow rate D according to the preceding steps.

7. Method for regulating the rotational speed of a rotor (7) of a brush mower (1) as a function of the load of plant matter to be mowed (13) and linear according to the preceding claim, **characterized in that** the average pressure P_{moy} is calculated over a time interval of 5 seconds or less, preferably over a time interval of 1 second.

8. Method for regulating the rotational speed of a rotor (7) of a brush mower (1) as a function of the load of plant matter to be mowed (13) according to any one of the preceding claims, **characterized in that** a verification of the transmission of information by said pressure sensor (14) is carried out and verification that the pressure value measured by said sensor (14) is greater than or equal to a minimum pressure Pₘᵢₙ, prior to carrying out the steps of regular measurements of effective pressure P and of regulating the flow rate D of the hydraulic pump (10) and:
- If the pressure sensor (14) transmits information and the measured pressure value is greater than Pₘᵢₙ, activating the regulation of the speed of the rotor (7) as a function of the load of plant matter to be mowed;
- Verifying that the regulation of the speed of the rotor (7) is activated, and
- If the pressure sensor (14) does not transmit information or if the pressure measured by said sensor (14) is less than Pₘᵢₙ, or if the regulation of the speed of the rotor (7) is not activated, applying a nominal operating flow rate Dₙₒₘ of the hydraulic pump (10).

9. Method for regulating the rotational speed of a rotor (7) of a brush mower (1) as a function of the load of plant matter to be mowed (13) and as a function of the forward speed of the vehicle (2) equipped with a means (16) for measuring said forward speed, according to any one of the preceding claims, **characterized in that** it further comprises the following steps:
- Definition of at least five operating flow rate values of the hydraulic pump (10), namely a minimum flow rate Dₘᵢₙ, at least three intermediate flow rates Dᵢₙₜ₁, Dᵢₙₜ₂ and Dᵢₙₜ₃ with Dᵢₙₜ₁ < Dᵢₙₜ₂ < Dᵢₙₜ₃ and Dₘᵢₙ < Dᵢₙₜ₁, and a maximum flow rate Dₘₐₓ, with Dₘₐₓ > Dᵢₙₜ₃, to be applied to said hydraulic pump (10) according to the forward speed of the vehicle (2);
- Carrying out measurements, at regular time intervals, of the forward speed V of the vehicle (2);
- Definition of a correlation between the forward speed V of the vehicle and the flow rate to be applied to said hydraulic pump (10), as follows:
∘ If V is less than a minimum speed Vₘᵢₙ, applying the minimum flow rate Dₘᵢₙ;
∘ If V is between a first intermediate speed V₁ᵢₙₜ₁, with V₁ᵢₙₜ₁ greater than or equal to Vₘᵢₙ, and a second intermediate speed V₂ᵢₙₜ₁, with V₂ᵢₙₜ₁ > V₁ᵢₙₜ₁, applying the first intermediate flow rate Dᵢₙₜ₁;
∘ If V is between a third intermediate speed V₁ᵢₙₜ₂, with V₁ᵢₙₜ₂ greater than V₂ᵢₙₜ₁, and a fourth intermediate speed V₂ᵢₙₜ₂, with V₂ᵢₙₜ₂ > V₁ᵢₙₜ₂, applying the second intermediate flow rate Dᵢₙₜ₂;
∘ If V is between a fifth intermediate speed V₁ᵢₙₜ₃, with V₁ᵢₙₜ₃ greater than V₂ᵢₙₜ₂, and a sixth intermediate speed V₂ᵢₙₜ₃, with V₂ᵢₙₜ₃ > V₁ᵢₙₜ₃, applying the third intermediate flow rate Dᵢₙₜ₃;
∘ If V is greater than a minimum speed Vₘₐₓ, with Vₘₐₓ > V₂ᵢₙₜ₃, applying the maximum flow rate Dₘₐₓ;
- Comparison between the values of flow rate regulation D of the operation of the hydraulic pump (10) determined relative to the load and of flow rate regulation relative to the forward speed V of the vehicle (2) and controlling said pump (10) with the greater of the two flow rates.

10. Brush mower (1) comprising a mowing unit (6) equipped with a rotor (7) and the rotor (7) comprising a plurality of cutting means (8), said brush mower (1) being furthermore equipped with a hydraulic pump (10) supplying compressed fluid, via a hydraulic circuit (11), to a hydraulic motor (12) comprised in the mowing unit (6) of said brush mower (1), the latter being furthermore **characterized in that** it comprises a device for regulating the rotational speed of said rotor (7) at least as a function of the load of plant matter (13) to be mowed, configured to implement the method according to any one of the preceding claims, said regulating device comprising at least one pressure measuring means (14) positioned at the level of the hydraulic pump (10) and/or the hydraulic circuit (11) and/or the hydraulic motor (12) for driving the rotation of the rotor (7) of the mowing unit (6) of the brush mower (1), said regulating device furthermore comprising, at least, electronic control means (15) of the hydraulic pump (10) for driving the hydraulic motor (12) for driving the rotation of the rotor (7) of the mowing unit (6), said electronic control means (15) including calculation and command means as a function of the load, as well as means for communicating and transmitting information between said at least one pressure measuring means (14) and said control means (15), and between the latter and said hydraulic pump (10) for regulating the flow rate of the latter.
